(19) Europäisches Patentamt
European Patent Office
Office européen des brevets

(11) **EP 4 138 391 A1**

(12) **EUROPEAN PATENT APPLICATION**
published in accordance with Art. 153(4) EPC

(43) Date of publication:
**22.02.2023 Bulletin 2023/08**

(21) Application number: **20931164.6**

(22) Date of filing: **30.06.2020**

(51) International Patent Classification (IPC):
**H04N 19/124** (2014.01)    **H04N 19/13** (2014.01)
**H04N 19/132** (2014.01)

(86) International application number:
**PCT/CN2020/099464**

(87) International publication number:
**WO 2021/208247 (21.10.2021 Gazette 2021/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.04.2020  CN 202010306805**

(71) Applicant: **Peking University**
**Beijing 100871 (CN)**

(72) Inventors:
• **MA, Siwei**
**Beijing 100871 (CN)**

• **JIA, Chuanmin**
**Beijing 100871 (CN)**
• **ZHAO, Zhenghui**
**Beijing 100871 (CN)**
• **CHANG, Jianhui**
**Beijing 100871 (CN)**
• **WANG, Shanshe**
**Beijing 100871 (CN)**

(74) Representative: **Hoffmann Eitle**
**Patent- und Rechtsanwälte PartmbB**
**Arabellastraße 30**
**81925 München (DE)**

(54) **MIMIC COMPRESSION METHOD AND APPARATUS FOR VIDEO IMAGE, AND STORAGE MEDIUM AND TERMINAL**

(57)     Disclosed are a method and a device for mimetic compression of a video image, and a storage medium and a terminal. The method includes: acquiring an original video image; extracting an edge structure image and a texture simulation image thereof based on the original video image, and extracting a texture feature latent variable based on the texture simulation image; decoding the edge structure image and texture feature latent variable to generate a decoded edge structure image and texture feature latent variable; and inputting the decoded edge structure image and texture feature latent variable into a pre-trained conditional convolutional generative network for fusion to generate a compressed-reconstructed image. Therefore, with embodiments of the present application, mimetic compression and reconstruction of images can be achieved, thereby improving image resolution.

FIG. 1

EP 4 138 391 A1

## Description

## Technical Field

The present invention relates to the field of digital signal processing, and in particular to a method and a device for mimetic compression of a video image, and a storage medium and a terminal.

## Background Art

The concept of mimicry comes from biology, which mainly refers to the phenomenon that some animals form unusually similar appearance or color and pattern in the evolution process to other living or non-living things. It is mainly for self-defense, and is most common in insects and molluscs, such as Kallimachinensis having a shape like dead leaves, and stick insects having a shape like bamboo joints or branches. Data compression is the process of representing information on the basis of a specific encoding scheme with fewer data elements than when it is not encoded, aiming at finding a compact data representation of the source data. From the perspective of mimicry, an image and video compression framework is established, which can break through the traditional construction of mimetic compression framework in principle and method.

In the existing image compression technology, a basic process of coding is as follows: for a still image and taking JPEG standard as an example, inputting an image for JPEG encoding to generate a JPEG encoded stream, and then decoding the stream to generate a decoded-reconstructed image; for a video and taking H.264 as an example, inputting a video for H.264-encoding to generate a H.264-encoded stream, and then H.264-decoding the stream to generate a decoded-reconstructed video. Due to deficiencies such as a lack of sufficient additional prior knowledge in super-resolution reconstruction of single image at present, the quality of super-resolution reconstructed image is greatly limited, thereby reducing the resolution of the reconstructed image.

## Summary of the Invention

Embodiments of the present application provide a method and a device for mimetic compression of a video image, and a storage medium and a terminal. A brief summary is provided below in order to provide a basic understanding of some aspects of the disclosed embodiments. The summary is not an extensive overview and is intended to neither identify key/critical elements nor delineate the scope of protection of these embodiments. Its sole purpose is to present some concepts in a simplified form as a prelude to a detailed description that is presented later.

In a first aspect, an embodiment of the present application provides a method for mimetic compression of a video image. The method includes:

acquiring an original video image;

extracting an edge structure image and a texture simulation image thereof based on the original video image, and extracting a texture feature latent variable based on the texture simulation image;

decoding the edge structure image and texture feature latent variable to generate a decoded edge structure image and texture feature latent variable; and

inputting the decoded edge structure image and texture feature latent variable into a pre-trained conditional convolutional generative network for fusion to generate a compressed-reconstructed image.

Optionally, before the acquiring an original video image, the method further includes:

creating a conditional convolutional generative network;

acquiring a selected training dataset; and

using the selected training dataset to perform end-to-end training on the conditional convolutional generative network on autoencoder-generative adversarial network, to generate a trained conditional convolutional generative network.

Optionally, the extracting an edge structure image and a texture simulation image thereof based on the original video image, and extracting a texture feature latent variable based on the texture simulation image includes:

performing structure extraction on the original video image based on deep learning and image processing techniques to generate the edge structure image; and

performing feature dimension reduction and extraction on the original image through a deep convolutional network to generate the texture feature latent variable.

Optionally, the decoding the edge structure image and texture feature latent variable to generate a decoded edge structure image and texture feature latent variable includes:

processing the edge structure image corresponding to the original video image by means of a combination of down-sampling and encoder to generate an extremely compressed stream of the edge structure image as the decoded edge structure image; and

performing quantization and entropy encoding on the texture feature latent variable corresponding to the original video image to achieve compression, so as to generate a decoded texture feature latent variable.

Optionally, the extracting an edge structure image and a texture feature latent variable corresponding to the original video image based on the original video image includes:

decomposing the original video image into several information layers, wherein the information layers include at least a texture information layer and a structure information layer; where

the texture information layer is the texture feature latent variable and the structure information layer is the edge structure image.

Optionally, the inputting the decoded edge structure image and texture feature latent variable into a conditional convolutional generative network for fusion to generate a compressed-reconstructed image includes:

performing compression encoding on the texture information layer and the structure information layer to generate a first structured stream and a second structured stream, wherein the first structured stream is a signal of the structure information layer, and the second structured stream is a signal of the texture information layer; and

jointly reconstructing the original video image and a semantic migration image based on the first structured stream and the second structured stream to generate a compressed-reconstructed image.

Optionally, the information of the structured streams further includes meta data of the video image, wherein the meta data includes at least resolution of the original video image, frame rate, bit depth, and number of bits contained in the signals of the texture information layer and the structure information layer respectively.

In a second aspect, an embodiment of the present application provides a device for mimetic compression of a video image. The device includes:

an image acquisition module for acquiring an original video image;

an information extraction module for extracting an edge structure image and a texture simulation image thereof based on the original video image, and extracting a texture feature latent variable based on the texture simulation image;

an information decoding module for decoding the edge structure image and texture feature latent variable to generate a decoded edge structure image and texture feature latent variable; and

an information fusion module for inputting the decoded edge structure image and texture feature latent variable into a pre-trained conditional convolutional generative network for fusion to generate a compressed-reconstructed image.

In a third aspect, an embodiment of the present application provides a computer storage medium storing a plurality of instructions thereon adapted to be loaded by a processor and to execute the method described above.

In a fourth aspect, an embodiment of the present application provides a terminal, which may include a processor and a memory, where the memory stores a computer program adapted to be loaded by the processor and to execute the method described above.

The technical solutions provided by the embodiments of the present application may include the following beneficial effects.

In the embodiments of the present application, a terminal first acquires an original video image, and extracts an edge structure image and a texture simulation image thereof based on the original video image, and extracts a texture feature latent variable based on the texture simulation image, and then decodes the edge structure image and texture feature latent variable to generate a decoded edge structure image and texture feature latent variable, and finally inputs the decoded edge structure image and texture feature latent variable into a pre-trained conditional convolutional generative network for fusion to generate a compressed-reconstructed image. In the present application, a conditional convolutional generative network is established by utilizing the advantages of a conditional deep convolutional network combined with a generative adversarial model, and the powerful feature extraction capability and dimension reduction abstraction capability of the convolutional neural network are utilized. On this basis, appropriate conditions are added to assist in generating samples, so as to achieve mimetic compression and reconstruction of images with the help of conditional deep convolutional network. Through end-to-end training of texture information compression encoding and image reconstruction network, and the information of the structure layer and the texture layer of the image being processed independently of each other, the conversion of semantic information of reconstructed image can be achieved by changing the texture feature latent variable, thereby improving the resolution of the reconstructed image.

It is to be understood that both the foregoing general description and the following detailed description are exemplary and explanatory only and are not restrictive of the present invention.

**Brief Description of the Drawings**

The accompanying drawings herein, which are incorporated in and constitute a part of the specification, illustrate embodiments consistent with the present invention and, together with the specification, serve to explain the principles of the present invention.

FIG. 1 is a schematic flow diagram of a method for mimetic compression of a video image provided by an embodiment of the present application;

FIG. 2 is a schematic diagram of a process for mimetic compression of a video image provided by an embodiment of the present application;

FIG. 3 is a schematic diagram of texture transformation for mimetic compression provided by an embodiment of the present application;

FIG. 4 is a schematic flow diagram of another method for mimetic compression of a video image provided by an embodiment of the present application;

FIG. 5 is a schematic diagram showing the effect of mimetic compression on an image provided by an embodiment of the present application;

FIG. 6 is a schematic diagram of a device for mimetic compression of a video image provided by an embodiment of the present application; and

FIG. 7 is a structural schematic diagram of a terminal provided by an embodiment of the present application.

**Detailed Description of the Invention**

The following description and drawings fully illustrate specific implementations of the present invention, so as to enable those skilled in the art to practice them.
It is noted that the embodiments described are only a few, but not all embodiments of the present invention. Based on the embodiments of the present invention, all other embodiments obtained by a person of ordinary skill in the art without inventive effort shall fall within the protection scope of the present invention.
Where the following description refers to the drawings, like numerals in different drawings indicate the same or similar elements, unless otherwise indicated. The implementations described in the following exemplary embodiments do not represent all implementations consistent with the present invention. Rather, they are merely examples of devices and methods consistent with some aspects of the present invention, as detailed in the appended claims.
In the description of the present invention, it is to be understood that the terms "first", "second" and the like are used for descriptive purposes only, and should not be construed as indicating or implying relative importance. For those of ordinary skill in the art, the specific meanings of the above terms in the present invention can be understood according to specific situations. Furthermore, in the description of the present invention, "a plurality" means two or more, unless otherwise specified. When describing a relationship between related objects, "and/or" means that there can be three relationships, for example, A and/or B, which may include three cases of A alone, A and B together, and B alone. The character "/" generally indicates that the related objects before and after the character are in an "or" relationship.

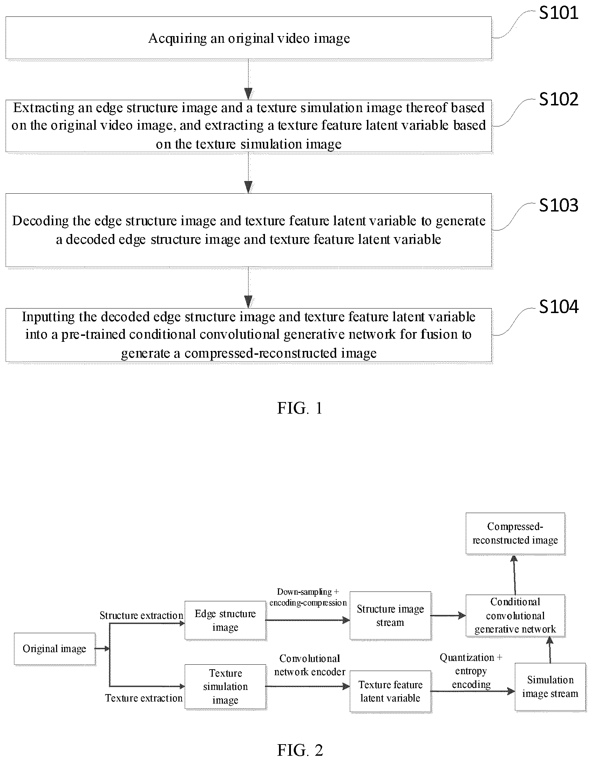

So far, in the existing image compression technology, a basic process of coding is as follows: for a still image and taking JPEG standard as an example, inputting an image for JPEG encoding to generate a JPEG encoded stream, and then decoding the stream to generate a decoded-reconstructed image; for a video and taking H.264 as an example, inputting a video for H.264-encoding to generate a H.264-encoded stream, and then H.264-decoding the stream to generate a decoded-reconstructed video. Due to deficiencies such as a lack of sufficient additional prior knowledge in super-resolution reconstruction of single image at present, the quality of super-resolution reconstructed image is greatly limited, thereby reducing the resolution of the reconstructed image. To this end, the present application provides a method and a device for mimetic compression of a video image, and a storage medium and a terminal, so as to solve the problems existing in the related technical field described above. In the technical solutions provided by the present application, a conditional convolutional generative network is established by utilizing the advantages of a conditional deep convolutional network combined with a generative adversarial model in the present application, and the powerful feature extraction capability and dimension reduction abstraction capability of the convolutional neural network are utilized. On this basis, appropriate conditions are added to assist in generating samples, so as to achieve mimetic compression and reconstruction of images with the help of conditional deep convolutional network. Through end-to-end training of texture information compression encoding and image reconstruction network, and the information of the structure layer and the texture layer of the image being processed independently of each other, the conversion of semantic information of reconstructed image can be achieved by changing the texture feature latent variable, thereby improving the resolution of the reconstructed image, which will be described in detail with an exemplary embodiment.
With reference to FIGs. 1-5, the method for mimetic compression of a video image provided by an embodiment of the present application will be described in detail below. The method can be implemented relying on a computer program, and can be run on a device for mimetic compression of a video image which is based on von Neumann architecture. The computer program may be integrated into an application or run as a separate utility application. The device for mimetic compression of a video image in the embodiment of the present application may be a user terminal, including but not limited to: personal computers, tablets, hand-held equipment, vehicle-mounted equipment, wearables, computing equipment or other processing equipment connected to wireless modems, etc. The user terminals can be called different names in different networks, for example: user equipment, access terminal, subscriber unit, subscriber station, mobile station, mobile table, remote station, remote terminal, mobile equipment, user terminal, terminal, wireless communication equipment, user agent or user device, cellular phone, cordless phone, personal digital assistant (PDA), terminal equipment in a 5G network or future evolution network, etc.

With reference to FIG. 1, a schematic flow diagram of a method for mimetic compression of a video image is provided for an embodiment of the present application. As shown in FIG. 1, the method of the embodiment of the present application may include the following steps.

At S101, an original video image is acquired.

The original video image includes consecutive image frames in the video.

In the embodiment of the present application, it is first necessary to acquire consecutive image frames in the original video when performing mimetic compression on the image frames in the original video.

At S102, an edge structure image and a texture simulation image thereof are extracted based on the original video image, and a texture feature latent variable is extracted based on the texture simulation image.

In a possible implementation, when consecutive image frames in the original video are acquired, the structure information of the original image is first extracted through a structure extraction network to obtain the edge structure image of the image frames; then the edge structure image is processed in a manner of down-sampling plus encoding-compression to obtain an extremely compressed stream of the edge structure image; then the texture simulation image of the image frames is acquired from the consecutive image frames in the original video; and a texture compression network is then used to process the texture simulation image to obtain the texture feature latent variable corresponding to the texture simulation image.

As shown in FIG. 2, for example, structure extraction and texture extraction are first performed based on the original image to respectively obtain the edge structure image and the texture simulation image corresponding to the original image; then the edge structure image is down-sampled and encoded-compressed to obtain a structure image stream; then the texture simulation image is processed by a convolutional network encoder to generate the texture feature latent variable; and then the texture feature latent variable is quantized and entropy encoded to generate a simulation image stream; finally, the structure image stream and the simulation image stream are inputted to a conditional convolutional generative network for mimetic compression, so as to generate a compressed-reconstructed image.

At S103, the edge structure image and texture feature latent variable are decoded to generate a decoded edge structure image and texture feature latent variable.

In the embodiment of the present application, the edge structure image corresponding to the original video image is processed by means of a combination of down-sampling and encoder to generate an extremely compressed stream of the edge structure image, and compression is achieved by performing quantization and entropy encoding on the texture feature latent variable corresponding to the original video image, so as to generate a decoded texture feature latent variable.

Specifically, with regard to pixel sparsity and binarization features of the edge structure image, the present application designs high-power down-sampling on the edge image as a pre-processing link of traditional encoder-compression, and then uses a super-resolution model to reconstruct the edge image at the decoding end. The texture latent variable selects an optimal feature dimension differently according to the semantic texture complexity of the dataset, and selects 8-32 as a fixed dimension of the texture latent variable in the experiment. To further save code rate, the example uses the HEVC quantization formula to quantize the texture latent variable and truncate it in a uint16 range, and then uses an arithmetic encoder for its compression.

In the embodiment of the present application, an original image frame is first decomposed into multi-channel visual information layers, including a texture information layer, a structure information layer, a semantic information layer, etc.; then the texture information layer is embedded into a feature latent variable space of a fixed dimension and quantized and compressed; then a deep network feature extraction operator is used to obtain the structure information layer; and down-sampling is combined with traditional encoder to achieve semantic compression of the edge image. At the decoding end, the decoded latent variable is inputted to the adversarial network through conditional convolution to achieve reconstruction. In the application, the multi-channel information layers are independent of each other, which may achieve a free combination of structure information, texture information and semantic information, as well as image reconstruction, so as to achieve the purpose of mimetic conversion of image texture; in addition, the information of the structure layer of the image is compressed by combining down-sampling and traditional compression methods; and meanwhile, the encoding representation of the texture information layer is efficient and compact, thereby achieving the purpose of mimetic compression with extremely low code rate.

At S104, the decoded edge structure image and texture feature latent variable is input into a pre-trained conditional convolutional generative network for fusion to generate a compressed-reconstructed image.

In the embodiment of the present application, the original video image is decomposed into several information layers, where the information layers include at least a texture information layer and a structure information layer; the texture information layer and the structure information layer are compression-encoded to generate a first structured stream and a second structured stream; and the original video image and a semantic migration image are jointly reconstructed based on the first structured stream and the second structured stream to generate a compressed-reconstructed image.

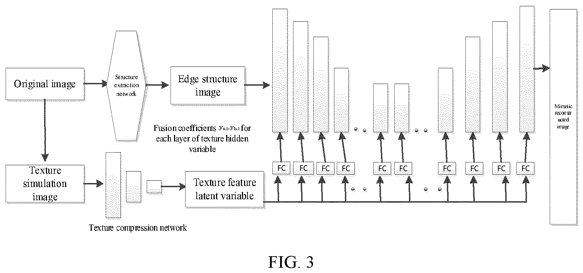

Further, in mimetic compression of the image, the structured streams corresponding to the extracted edge image and texture latent variable are fused with each other at the generator to reconstruct the target image. The example designs an adaptive fusion method for texture latent variable as shown in FIG. 3. A fully connected layer $FC_i$ is added to each layer of the generator network, and the texture latent variable z is mapped by this layer into two fusion coefficients $y_{s,i}, y_{b,i}$ of this layer, and the mapping function is $f_i$, namely: $y_{s,i}, y_{b,i} = f_i(z)$.

$x_i$ is inputted to each layer of the generator (the input to the first layer is the edge image, the input to other down-sampled layers is the output of the previous layer, and the input to the up-sampled layer is the series connection of the output of the previous layer and the skip layer), the latent variable is fused using the formula

$$g_i'(x_i, y) = y_{s,i} \frac{x_i - \mu(x_i)}{\sigma(x_i)} + y_{b,i}$$

Through the adaptive fusion method described above, the latent variable effectively fuses the texture information in each layer of the generator with the edge structure during remapping and normalization calculation, which effectively improves the reconstruction effect of the generator on complex textures.

Further, the original image I is compressed into a bit stream with an extremely low bit rate and a high quality image I^ is reconstructed that is subjectively consistent with the original image in perception. FIG. 3 shows the framework and flow of the compression algorithm proposed herein, which consists of two independent layers: an edge layer is obtained by extracting the edge image I^E from the image I, thereby retaining structure information of image I; meanwhile, a texture layer is obtained through the variational autoencoder encoding high-dimensional texture information into a low-dimensional vector, thereby retaining semantic and texture information of image I. Both the edge image and the low-dimensional latent variable can be efficiently compressed into a binary stream, so as to form the final transmitted bit stream. Finally at the decoding end, the conditional generative network, taking the reconstructed edge image as the conditional input, uses the latent variable to hierarchically and adaptively fuse with the edge image in the generator to generate the image I^, so as to achieve the reconstruction with high visual perception quality.

In the embodiments of the present application, a terminal first acquires an original video image, and extracts an edge structure image and a texture simulation image thereof based on the original video image, and extracts a texture feature latent variable based on the texture simulation image, and then decodes the edge structure image and texture feature latent variable to generate a decoded edge structure image and texture feature latent variable, and finally inputs the decoded edge structure image and texture feature latent variable into a pre-trained conditional convolutional generative network for fusion to generate a compressed-reconstructed image. In the present application, a conditional convolutional generative network is established by utilizing the advantages of a conditional deep convolutional network combined with a generative adversarial model, and the powerful feature extraction capability and dimension reduction abstraction capability of the convolutional neural network are utilized. On this basis, appropriate conditions are added to assist in generating samples, so as to achieve mimetic compression and reconstruction of images with the help of conditional deep convolutional network. Through end-to-end training of texture information compression encoding and image reconstruction network, and the information of the structure layer and the texture layer of the image being processed independently of each other, the conversion of semantic information of reconstructed image can be achieved by changing the texture feature latent variable, thereby improving the resolution of the reconstructed image.

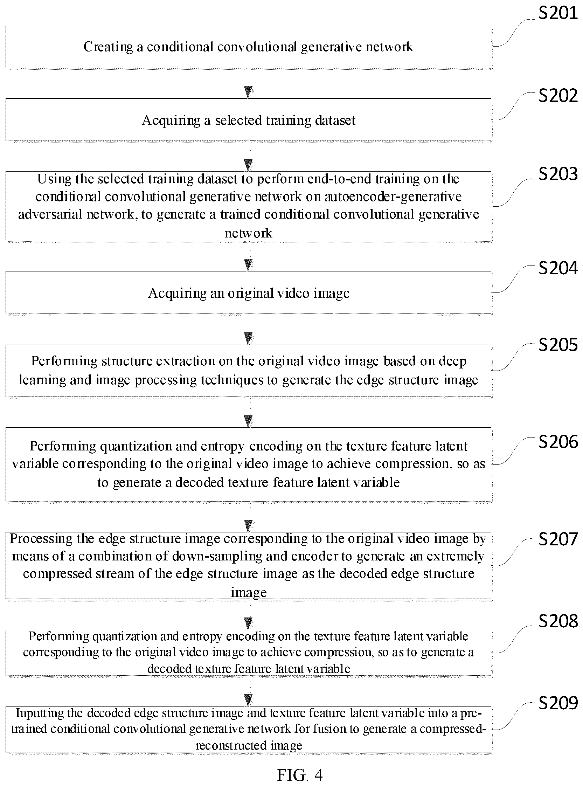

With reference to FIG. 4, a schematic flow diagram of a method for mimetic compression of a video image is provided for an embodiment of the present application. The embodiment is illustrated with an example in which the method for mimetic compression of a video image is applied to a user terminal. The method for mimetic compression of a video image may include the following steps.

At S201, a conditional convolutional generative network is created.

At S202, a selected training dataset is acquired.

At S203, the selected training dataset is used to perform end-to-end training on the conditional convolutional generative network on autoencoder-generative adversarial network, to generate a trained conditional convolutional generative network.

In the embodiment of the present application, in order to compress texture information of the image, an end-to-end VAE-GAN network is trained in the example to extract the latent variable of texture information from the original image. The encoder adopts a variational autoencoder model with a residual block structure, and the generator adopts a Unet network structure including an encoding network, a decoding network and a bottleneck layer and having a symmetric jump-direct link structure. In training, a least-square generative adversarial network variant loss is used; meanwhile, a KL divergence is added to measure the distance between the posterior distribution and the standard Gaussian distribution of latent variable; and a minimum absolute value error loss and visual perception loss (VGG loss) between the generated image and the original image are added to retain texture information at a pixel level and a visual perception level, respectively; in addition, in order to enhance the internal correlation between the texture latent variable and the corresponding image and improve the conceptual representational ability of the latent variable on texture information, the loss function further adds a minimum absolute value error loss of the texture latent variable obtained by encoding-compressing the generated image and the original image separately.

Further in training, the encoder is optimized synchronously with the generator, while the generator is optimized alternately with the discriminator. After training, the solution can apply the texture compression encoder and the image reconstruction generator to mimetic compression. As shown in the flow of FIG. x, in application, an edge structure image is extracted from the original image on the one hand, and on the other hand, a conditional image is selected to simulate the texture of the original image, of which a texture feature latent variable is extracted by the convolutional network encoder, and finally, the edge structure image and the texture feature latent variable are inputted together to a generative network to obtain a mimetic reconstructed image.

At S204, an original video image is acquired.

At S205, structure extraction is performed on the original video image based on deep learning and image processing techniques to generate the edge structure image.

At S206, quantization and entropy encoding are performed on the texture feature latent variable corresponding to the original video image to achieve compression, so as to generate a decoded texture feature latent variable.

At S207, the edge structure image corresponding to the original video image is processed by means of a combination of down-sampling and encoder to generate an extremely compressed stream of the edge structure image as the decoded edge structure image.

At S208, quantization and entropy encoding are performed on the texture feature latent variable corresponding to the original video image to achieve compression, so as to generate a decoded texture feature latent variable.

At S209, the decoded edge structure image and texture feature latent variable is input into a pre-trained conditional convolutional generative network for fusion to generate a compressed-reconstructed image.

In the embodiment of the present application, the application of the solution requires two stages, i.e.,

a pre-training stage and an application stage. At the pre-training stage, an end-to-end training is performed on the selected dataset by employing the above conditional autoencoder-generative adversarial network, i.e. an edge image and a texture latent variable are extracted separately from the original image, which are then inputted to the generative network to obtain a reconstructed image; a gradient descent method is used to continuously reduce the difference between the reconstructed image and the original image and improve subjective and objective quality of the reconstructed image, so as to achieve the optimization of the encoder and the generator.

At the application stage, the trained model is decoupled; the edge image and the texture latent variable are extracted separately at the decoding end, and then compressed into two separate bit streams; at the decoding end, the edge image and the latent variable are decoded-reconstructed separately first, and then inputted to the generator network to reconstruct the target image; when mimetic transformation is performed, the conditional image to be simulated is selected and inputted to a texture compression encoder to obtain a corresponding texture latent variable, or a random texture latent variable is obtained by randomly sampling a standard Gaussian distribution, which is then inputted to the conditional convolutional generative network together with the edge image extracted from the original image to obtain the target mimetic reconstructed image.

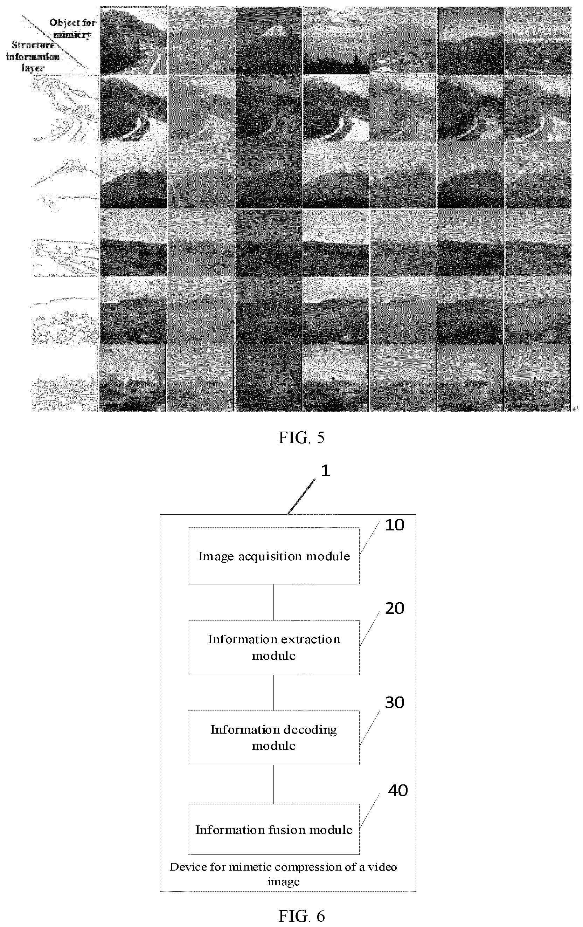

With regard to compression, the present invention has distinct advantages in compression performance in terms of saving code rate and subjective quality, as compared with traditional encoders such as JPEG, JPEG2000 and HEVC, and the contrasting effect is shown in FIG. 5. In terms of mimetic transformation, the present invention enables free combination and natural fusion of the edge structure layer and the texture perception layer of the image, thereby enabling the switching of different texture morphologies for a given image structure and the generation of an image with high subjective visual quality, i.e., mimetic compression-reconstruction. The effect of mimetic compression-reconstruction on human face, shoe & bag and natural image datasets is shown in the drawings.

It can be seen that the method proposed in the present invention divides an image into different visual perception levels that are independent of each other; the feature stream efficiently and compactly represents texture information and structure information of the image, so that the image has visual feature analyzability and texture feature editability during compression; also, the code rate is greatly saved, and the subjective quality of compression with extremely low code rate is improved.

In the embodiments of the present application, a terminal first acquires an original video image, and extracts an edge structure image and a texture simulation image thereof based on the original video image, and extracts a texture feature latent variable based on the texture simulation image, and then decodes the edge structure image and texture feature latent variable to generate a decoded edge structure image and texture feature latent variable, and finally inputs the decoded edge structure image and texture feature latent variable into a pre-trained conditional convolutional generative network for fusion to generate a compressed-reconstructed image. In the present application, a conditional convolutional generative network is established by utilizing the advantages of a conditional deep convolutional network combined with a generative adversarial model, and the powerful feature extraction capability and dimension reduction abstraction capability of the convolutional neural network are utilized. On this basis, appropriate conditions are added to assist in generating samples, so as to achieve mimetic compression and reconstruction of images with the help of conditional deep convolutional network. Through end-to-end training of texture information compression encoding and image reconstruction network, and the information of the structure layer and the texture layer of the image being processed independently of each other, the conversion of semantic information of reconstructed image can be achieved by changing the texture feature latent variable, thereby improving the resolution of the reconstructed image.

An embodiment of the device of the present invention is provided below, which may be used to execute the embodiment of the method of the present invention. For details which are not disclosed in the embodiment of the device of the present invention, reference is made to the embodiment of the method of the present invention.

Referring to FIG. 6, a structural schematic diagram of a device for mimetic compression of a video image provided by an exemplary embodiment of the present invention is shown. The device for mimetic compression of a video image may be implemented as a, or part of a terminal through software, hardware or combination thereof. The device 1 includes an image acquisition module 10, an information extraction module 20, an information decoding module 30, and an information fusion module 40.

The image acquisition module 10 is used for acquiring an original video image.

The information extraction module 20 is used for extracting an edge structure image and a texture simulation image thereof based on the original video image, and extracting a texture feature latent variable based on the texture simulation image.

The information decoding module 30 is used for decoding the edge structure image and texture feature latent variable to generate a decoded edge structure image and texture feature latent variable.

The information fusion module 40 is used for inputting the decoded edge structure image and texture feature latent variable into a pre-trained conditional convolutional generative network for fusion to generate a compressed-reconstructed image.

It is noted that the device for mimetic compression of a video image provided by the embodiment described above, when executing the method for mimetic compression of a video image, merely takes the above division of functional modules as an example for illustration. In practical applications, the above functionalities may be allocated to be completed by different functional modules according to requirements, i.e., the internal structure of an equipment may be divided into different functional modules so as to complete all or part of the functionalities described above. In addition, the device for mimetic compression of a video image provided by the embodiment described above falls within the same concept as that of the method for mimetic compression of a video image, and the implementation process thereof is detailed in the embodiment of the method, which will not be repeated here.

The above serial numbers of embodiments of the present application are merely for description, and do not indicate superiority or inferiority of the embodiments.

In the embodiments of the present application, a terminal first acquires an original video image, and extracts an edge structure image and a texture simulation image thereof based on the original video image, and extracts a texture feature latent variable based on the texture simulation image, and then decodes the edge structure image and texture feature latent variable to generate a decoded edge structure image and texture feature latent variable, and finally inputs the decoded edge structure image and texture feature latent variable into a pre-trained conditional convolutional generative network for fusion to generate a compressed-reconstructed image. In the present application, a conditional convolutional generative network is established by utilizing the advantages of a conditional deep convolutional network combined with a generative adversarial model, and the powerful feature extraction capability and dimension reduction abstraction capability of the convolutional neural network are utilized. On this basis, appropriate conditions are added to assist in generating samples, so as to achieve mimetic compression and reconstruction of images with the help of conditional deep convolutional network. Through end-to-end training of texture information compression encoding and image reconstruction network, and the information of the structure layer and the texture layer of the image being processed independently of each other, the conversion of semantic information of reconstructed image can be achieved by changing the texture feature latent variable, thereby improving the resolution of the reconstructed image.

The present invention further provides a computer-readable medium having stored thereon program instructions which, when executed by a processor, implement the method for mimetic compression of a video image provided by the embodiments of the method described above.

The present invention further provides a computer program product including instructions which, when run on a computer, cause the computer to execute the method for mimetic compression of a video image described in the embodiments of the method above.

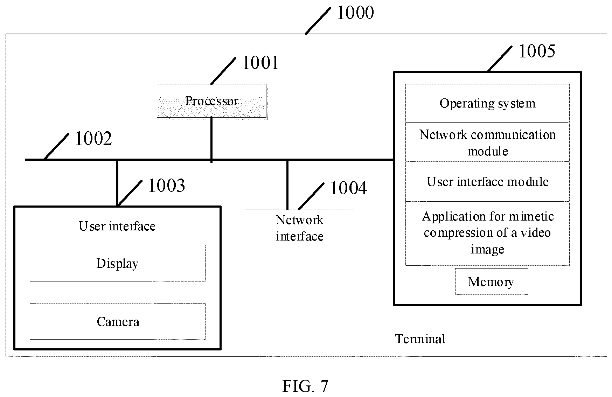

With reference to FIG. 7, a structural schematic diagram of a terminal is provided for an embodiment of the present application. As shown in FIG. 7, the terminal 1000 may include at least one processor 1001, at least one network interface 1004, a user interface 1003, a memory 1005, and at least one communication bus 1002.

The communication bus 1002 is used to enable connection and communication between these components.

The user interface 1003 may include a display, a camera, and optionally the user interface 1003 may further include standard wired and wireless interfaces.

The network interface 1004 may optionally include standard wired and wireless (e.g., WI-FI) interfaces.

The processor 1001 may include one or more processing cores. The processor 1001 uses various interfaces and lines to connect various parts of the electronic equipment 1000, and executes various functionalities of the electronic equipment 1000 and process data by running or executing instructions, programs, code sets or instruction sets stored in the memory 1005 and calling the data stored in the memory 1005. Optionally, the processor 1001 may be implemented in a hardware form of at least one of digital signal processing (DSP), field-programmable gate array (FPGA), and programmable logic array (PLA). The processor 1001 may integrate one or a combination of a central processing unit (CPU), a graphics processing unit (GPU), a modem, etc. CPU mainly deals with the operating system, user interface and applications, etc.; GPU is responsible for rendering and drawing of the content required to be displayed on the display; and the modem is used to deal with wireless communication. It will be appreciated that the modem described above may also be implemented on a single chip without being integrated into the processor 1001.

The memory 1005 may include a random access memory (RAM) or may include a read-only memory. Optionally, the memory 1005 includes a non-transitory computer-readable storage medium. The memory 1005 may be used to store instructions, programs, code, code sets or instruction sets. The memory 1005 may include a program storing area and a data storing area, where the program storing area may store instructions for implementing the operating system, instructions for at least one function (such as touch control function, audio playing function, image playing function, etc.), instructions for implementing the embodiments of the method described above, etc.; and the data storing area may store data and the like involved in the embodiments of the method above. Optionally the memory 1005 may be at least one storage device positioned remotely from the aforementioned processor 1001. As shown in FIG. 7, the memory 1005, as a computer storage medium, may include an operating system, a network communication module, a user interface module, and an application for mimetic compression of the video image.

In the terminal 1000 shown in FIG. 7, the user interface 1003 is mainly used to provide an input interface for the user, and acquire the data inputted by the user, while the processor 1001 may be used to call the application for mimetic compression of the video image that is stored in the memory 1005, and executes specifically the following operations:

acquiring an original video image;

extracting an edge structure image and a texture simulation image thereof based on the original video image, and extracting a texture feature latent variable based on the texture simulation image;

decoding the edge structure image and texture feature latent variable to generate a decoded edge structure image and texture feature latent variable; and

inputting the decoded edge structure image and texture feature latent variable into a pre-trained conditional convolutional generative network for fusion to generate a compressed-reconstructed image.

In one embodiment, the processor 1001 further executes the following operations prior to executing the acquiring an original video image:

creating a conditional convolutional generative network;

acquiring a selected training dataset; and

using the selected training dataset to perform end-to-end training on the conditional convolutional generative network on autoencoder-generative adversarial network, to generate a trained conditional convolutional generative network.

In the embodiments of the present application, a terminal first acquires an original video image, and extracts an edge structure image and a texture simulation image thereof based on the original video image, and extracts a texture feature latent variable based on the texture simulation image, and then decodes the edge structure image and texture feature latent variable to generate a decoded edge structure image and texture feature latent variable, and finally inputs the decoded edge structure image and texture feature latent variable into a pre-trained conditional convolutional generative network for fusion to generate a compressed-reconstructed image. In the present application, a conditional convolutional generative network is established by utilizing the advantages of a conditional deep convolutional network combined with a generative adversarial model, and the powerful feature extraction capability and dimension reduction abstraction capability of the convolutional neural network are utilized. On this basis, appropriate conditions are added to assist in generating samples, so as to achieve mimetic compression and reconstruction of images with the help of conditional deep convolutional network. Through end-to-end training of texture information compression encoding and image reconstruction network, and the information of the structure layer and the texture layer of the image being processed independently of each other, the conversion of semantic information of reconstructed image can be achieved by changing the texture feature latent variable, thereby improving the resolution of the reconstructed image.

It will be appreciated by those of ordinary skill in the art that implementation of all or part of the flow in the methods of the embodiments described above can be accomplished through instructing the related hardware by a computer program, which may be stored in a computer-readable storage medium, and which, when executed, may include the flow of the embodiments of the methods described above. The storage medium may be a magnetic disk, an optical disk, a read-only storage memory or a random storage memory, etc.

The above disclosures are merely preferred embodiments of the present application, and they are of course not intended to limit the scope of the claims of the present application, and therefore, equivalent changes made according to the claims of the present application are still within the scope of the present application.

## Claims

1. A method for mimetic compression of a video image, **characterized by** comprising:

    acquiring an original video image;
    extracting an edge structure image and a texture image thereof based on the original video image, and extracting a texture feature latent variable based on the texture simulation image;
    decoding the edge structure image and texture feature latent variable to generate a decoded edge structure image and texture feature latent variable; and
    inputting the decoded edge structure image and texture feature latent variable into a pre-trained conditional convolutional generative network for fusion to generate a reconstructed image.

2. The method according to claim 1, **characterized in that**, before the acquiring an original video image, the method further comprises:

    creating a conditional convolutional generative network;
    acquiring a selected training dataset; and

    using the selected training dataset to perform end-to-end training on the conditional convolutional generative network on autoencoder-generative adversarial network, to generate a trained conditional convolutional generative network.

3. The method according to claim 1, **characterized in that** the extracting an edge structure image and a texture simulation image thereof based on the original video image, and extracting a texture feature latent variable based on the texture simulation image comprises:

    performing structure extraction on the original video image based on deep learning and image processing techniques to generate the edge structure image; and
    performing quantization and entropy encoding on the texture feature latent variable corresponding to the original video image to achieve compression, so as to generate a decoded texture feature latent variable.

4. The method according to claim 1, **characterized in that** the decoding the edge structure image and texture feature latent variable to generate a decoded edge structure image and texture feature latent variable comprises:

    processing the edge structure image corresponding to the original video image by means of a combination of down-sampling and encoder to generate an extremely compressed stream of the edge structure image as the decoded edge structure image; and
    performing quantization and entropy encoding on the texture feature latent variable corresponding to the original video image to achieve compression, so as to generate a decoded texture feature latent variable.

5. The method according to claim 1, **characterized in that** the extracting an edge structure image and a texture feature latent variable corresponding to the original video image based on the original video image comprises:

    decomposing the original video image into several information layers, wherein the information layers comprise at least a texture information layer and a structure information layer; wherein the texture information layer is the texture feature latent variable and the structure information layer is the edge structure image.

6. The method according to claim 1 or 5, **characterized in that** the inputting the decoded edge structure image and texture feature latent variable into a conditional convolutional generative network for fusion to generate a compressed-reconstructed image comprises:

performing compression encoding on the texture information layer and the structure information layer to generate a first structured stream and a second structured stream, wherein the first structured stream is a signal of the structure information layer, and the second structured stream is a signal of the texture information layer; and

jointly reconstructing the original video image and a semantic migration image based on the first structured stream and the second structured stream to generate a compressed-reconstructed image.

7. The method according to claim 6, **characterized in that** the information of the structured streams further comprises meta data of the video image, wherein the meta data comprises at least resolution of the original video image, frame rate, bit depth, and number of bits contained in the signals of the texture information layer and the structure information layer respectively.

8. A device for mimetic compression of a video image, **characterized by** comprising:

an image acquisition module for acquiring an original video image;
an information extraction module for extracting an edge structure image and a texture simulation image thereof based on the original video image, and extracting a texture feature latent variable based on the texture simulation image;
an information decoding module for decoding the edge structure image and texture feature latent variable to generate a decoded edge structure image and texture feature latent variable; and
an information fusion module for inputting the decoded edge structure image and texture feature latent variable into a pre-trained conditional convolutional generative network for fusion to generate a compressed-reconstructed image.

9. A computer storage medium, **characterized by** storing a plurality of instructions thereon adapted to be loaded by a processor and to execute the method according to any of claims 1-7.

10. A terminal, **characterized by** comprising a processor and a memory, wherein the memory stores a computer program adapted to be loaded by the processor and to execute the method according to any of claims 1-7.

| Acquiring an original video image | S101 |

↓

| Extracting an edge structure image and a texture simulation image thereof based on the original video image, and extracting a texture feature latent variable based on the texture simulation image | S102 |

↓

| Decoding the edge structure image and texture feature latent variable to generate a decoded edge structure image and texture feature latent variable | S103 |

↓

| Inputting the decoded edge structure image and texture feature latent variable into a pre-trained conditional convolutional generative network for fusion to generate a compressed-reconstructed image | S104 |

FIG. 1

FIG. 2

FIG. 3

Creating a conditional convolutional generative network — S201

Acquiring a selected training dataset — S202

Using the selected training dataset to perform end-to-end training on the conditional convolutional generative network on autoencoder-generative adversarial network, to generate a trained conditional convolutional generative network — S203

Acquiring an original video image — S204

Performing structure extraction on the original video image based on deep learning and image processing techniques to generate the edge structure image — S205

Performing quantization and entropy encoding on the texture feature latent variable corresponding to the original video image to achieve compression, so as to generate a decoded texture feature latent variable — S206

Processing the edge structure image corresponding to the original video image by means of a combination of down-sampling and encoder to generate an extremely compressed stream of the edge structure image as the decoded edge structure image — S207

Performing quantization and entropy encoding on the texture feature latent variable corresponding to the original video image to achieve compression, so as to generate a decoded texture feature latent variable — S208

Inputting the decoded edge structure image and texture feature latent variable into a pre-trained conditional convolutional generative network for fusion to generate a compressed-reconstructed image — S209

FIG. 4

FIG. 5

FIG. 6

/ 1000

/ 1001

Processor

/ 1005

Operating system

Network communication module

User interface module

Application for mimetic compression of a video image

/ 1002

/ 1003

User interface

Display

Camera

/ 1004

Network interface

Memory

Terminal

FIG. 7

## INTERNATIONAL SEARCH REPORT

| International application No. |
|---|
| **PCT/CN2020/099464** |

### A. CLASSIFICATION OF SUBJECT MATTER

H04N 19/124(2014.01)i; H04N 19/13(2014.01)i; H04N 19/132(2014.01)i

According to International Patent Classification (IPC) or to both national classification and IPC

### B. FIELDS SEARCHED

Minimum documentation searched (classification system followed by classification symbols)

H04N 19

Documentation searched other than minimum documentation to the extent that such documents are included in the fields searched

Electronic data base consulted during the international search (name of data base and, where practicable, search terms used)

CNABS; CNTXT; EPTXT; DWPI; USTXT; WOTXT; VEN; CNKI: 拟态, 隐变量, 边缘, 视频, 压缩, 编码, 网络, 纹理, 训练, 卷积, textur+, mimic+, edge+, decod+, video+, hidd+, network+, convolution, encod+, cod+, train+, compress+

### C. DOCUMENTS CONSIDERED TO BE RELEVANT

| Category* | Citation of document, with indication, where appropriate, of the relevant passages | Relevant to claim No. |
|---|---|---|
| X | 马思伟 等 (MA, Siwei et al.). "智能视频编码 (Non-official translation: Advanced Video Coding)" 人工智能 (AI-View), No. 2, 10 April 2020 (2020-04-10), ISSN: 2096-5036, full text, pages 26-28 | 1-10 |
| A | CN 110166779 A (XIDIAN UNIVERSITY) 23 August 2019 (2019-08-23) entire document | 1-10 |
| A | WO 2014052602 A1 (VID SCALE, INC.) 03 April 2014 (2014-04-03) entire document | 1-10 |
| A | US 2018307981 A1 (INTEL CORP.) 25 October 2018 (2018-10-25) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 December 2020** | **11 January 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/099464**

| Patent document cited in search report | | | Publication date (day/month/year) | Patent family member(s) | | | Publication date (day/month/year) |
|---|---|---|---|---|---|---|---|
| CN | 110166779 | A | 23 August 2019 | None | | | |
| WO | 2014052602 | A1 | 03 April 2014 | TW | 201427426 | A | 01 July 2014 |
| US | 2018307981 | A1 | 25 October 2018 | CN | 108734649 | A | 02 November 2018 |
| | | | | EP | 3396602 | A1 | 31 October 2018 |

Form PCT/ISA/210 (patent family annex) (January 2015)